# EUROPÄISCHE PATENTSCHRIFT

(11) **EP 0 544 060 B1**
(45) Veröffentlichungstag und Bekanntmachung des Hinweises auf die Patenterteilung: **27.12.1995**
(21) Anmeldenummer: 92114264.2
(22) Anmeldetag: 21.08.1992
(51) Int. Cl.: B60J 7/06, B60J 7/10, B63B 17/02

(54) **Planengestell**
Frame for tarpaulin
Armature de bâche

(30) Priorität: 12.11.1991 DE 4137549
(43) Veröffentlichungstag der Anmeldung: 02.06.1993
(73) Patentinhaber: Koch, Christian, D-21423 Winsen (DE)
(72) Erfinder: Koch, Christian, D-21423 Winsen (DE)
(74) Vertreter: Vonnemann, Gerhard, Dr.-Ing.

(56) Entgegenhaltungen:
- CA-A- 1 132 168
- DE-U- 9 103 401
- US-A- 3 051 524
- US-A- 3 314 717
- US-A- 4 694 774

## Beschreibung

Die Erfindung betrifft ein Planengestell 19 für Fahrzeuge und Anhänger mit Pfosten 20 zwischen denen in Querrichtung verbindende Spriegelprofile 23 und in Längsrichtung Planenkantenprofile angeordnet sind.

Solche Planengestelle sind aus dem deutschen Gebrauchsmuster DE-U-91 03 401 bekannt. Sie werden insbesondere in hohen Stückzahlen für PKW-Anhänger gebaut, um die zu befördernde Fracht gegen Witterungseinflüsse oder gegen Sicht zu schützen. Dazu werden die Planengestelle mit einer passend zugeschnittenen Plane überstülpt.

Dieses Dokument zeigt die Merkmale des Oberbegriffs des Anspruchs 1.

Da sich die Anhänger, auf denen ein solches Planengestell montiert ist, während der Fahrt durch die auftretenden Kräfte elastisch verformen, sind Relativbewegungen zwischen der übergestülpten Plane und dem Planengestell unvermeidlich. Die reibende Beanspruchung der Plane auf dem Planengestell führt an den Auflagepunkten zu einem Verschleiß der Plane. Zur Erhöhung der Lebensdauer der Plane wird diese an den stärker beanspruchten Stellen entsprechend verstärkt. Bei Kunststoffplanen erfolgt dies durch Einschweißen entsprechender Flicken. Das Schweißen solcher Flicken auf die großflächigen Planen erfordert bei der Fertigung eine besondere Sorgfalt, da die Planen infolge ihrer Größe schlecht zu handhaben sind. Besonders schwierig ist es, paßgenau längere Streifen aufzuschweißen, die die Planen an den Längsseiten eines Planengestells schützen sollen. Die erforderlichen Arbeiten zum Verstärken der Plane bedingen einen nachteilig erhöhten Fertigungsaufwand.

Das Aufbringen von Scheuerschutzflächen als Kappen ist beispielsweise aus der US-A-3,051,524 bekannt. In dieser Schrift werden die Ecken eines LKW-Aufbaus mit Kappen versehen, die eine aufgelegte Plane vor dem Durchscheuern schützen sollen. Diese Kappen sind sehr kompliziert geformt. Zum einen hintergreifen sie die seitlich die Ladefläche begrenzenden Profile, zum anderen sind sie kompliziert zu montieren, da für die Montage zusätzliche Schraubverbindungen erforderlich sind.

In der US-A-3,314,717 werden statt dessen kugelförmige Schutzkappen an den selben Stellen vorgeschlagen, die ebenfalls mittels Schraubverbindungen befestigt werden und aufwendig zu fertigen sind.

Schließlich sind aus der US-A-4,694,774 Scheuerschutzkappen bekannt, die sowohl länglich als auch halbkugelförmig ausgebildet sind und zusätzliche Befestigungselemente tragen, die es ermöglichen die Scheuerschutzkappen auf Profilen zu befestigen, wie beispielsweise an der Reeling eines Bootes oder eines Anhängers.

Die bekannten Scheuerschutzkappen weisen den Nachteil auf, daß sie aufwendig zu fertigen sind, da sie aufgrund ihrer im wesentlichen kugelförmigen Gestalt einen hohen Materialeinsatz bedingen. Sie verteilen zwar die Kantenpressung auf eine größere, kugelförmige Oberfläche, weisen jedoch bis auf die aus der US-A-4,694,774 bekannten Scheuerschutzkappen keine Eigenelastizität auf, die eine aufgelegte Plane durch Eigenelastizität auf Spannung halten könnte. Durch die Vielzahl an derartigen Planengestellen vorhandenen Ecken und Kanten führen die bekannten Scheuerschutzkappen zu einem hohen Montage- und Kostenaufwand.

Aufgabe der Erfindung ist es somit, den Herstellungs- und Montageaufwand derartiger Scheuerschutzkappen zu verringern.

Die Aufgabe wird dadurch gelöst, daß auf den verbindenden Spriegelprofilen 23 kurze Spriegelprofile 24 vorgesehen sind, an deren Enden Platten 17 als Scheuerschutzkappen, die zu einem Teil ihres Randes hin sich verjüngend geformt sind, mit einer Unterseite, die Formelemente zum Positionieren aufweist, befestigt sind.

Die Platte ist zu einem Teil ihres Randes hin sich verjüngend geformt, so daß sie eine eigene Formelastizität aufweist. Spezielle Schaumstoffe sind nicht erforderlich. Diese Scheuerschutzkappe kann eine aufgelegte Plane auch unter Spannung halten, da sie aufgrund ihrer Formelastizität nachgibt. Weil sie darüber hinaus aus Vollmaterial besteht, weist sie einen geringen Verschleiß auf. Ihre plattenförmige Gestalt erfordert nur geringen Materialeinsatz, so daß auch der Herstellaufwand vorteilhaft verringert wird.

Bei dem Planengestell, wird die notwendige Neigung der Dachfläche dadurch erzielt, daß auf den verbindenden Spriegelprofilen kurze Spriegelprofile angeordnet sind. Als Scheuerschutzkappen sind an den Enden der kurzen Spriegelprofile Platten angeordnet. Die Platten können vorteilhafterweise als Spritzgußteile hergestellt werden. Es ist wesentlich einfacher, die Platten an dem festen Planengestell zu montieren als die vergleichsweise dünnen Flicken auf der Plane festzuschweißen. Trotz verringertem Fertigungsaufwand ist die Lebenserwartung der Plane vorteilhaft erhöht.

Dadurch, daß die Formelemente zum Positionieren als angeformte, vorzugsweise zylindrische, Stifte ausgebildet sind, läßt sich die Kappe leicht auf den Enden in der richtigen Position halten. Außerdem läßt sie sich auch zu günstigen Fertigungskosten herstellen.

Als besonders einfach zu montierende und sich im rauhen Betrieb bewährende Ausgestaltung der Platte hat sich ergeben, wenn die Formelemente zum Positionieren außerhalb des sich verjüngenden Teils der Platte angeordnet sind und/oder je zwei Stifte im gleichen Abstand zu jeder Seite einer gedachten Mittelinie sowie ein Stift etwa im Zentrum der Platte angeordnet sind.

Zur dauerhaften Befestigung der Kappe ist es vorteilhaft, wenn zwischen den sich gegenüberstehenden Stiften mindestens eine Öffnung mit einer Kegelfläche oder Stufenfläche als Formelement zum Befestigen mittels einer Senkkopfschraube oder mittels eines Blindnietes vorgesehen ist.

Die Montage vereinfacht sich, wenn die sich gegenüberstehenden Stifte zueinander geneigt ausgerichtet sind, da die Stifte ein selbsttätiges Festklemmen der Kappe bewirken.

Die Neigung der Stifte läßt sich kostengünstig beim Spritzen dadurch erreichen, daß ein oder mehrere Stifte an der Ansatzstelle zur Platte einen Steg aufweisen, der zur gedachten Mittelinie gerichtet ist.

Besonders wenig Verschleiß ergibt sich, wenn die Schutzkappe rund ausgebildet ist und einen Durchmesser aufweist, der die weite der im Betrieb auftretenden Relativbewegungen zwischen Platte und aufliegender Plane übertrifft.

Dadurch, daß die Schutzkappe aus, vorzugsweise schwarzem, Kunststoff, insbesondere PVC, geformt ist, nimmt die Scheuerschutzkappe nach einiger Zeit infolge der Temperatur und des Materials selbsttätig eine Form an, die sie auch dauerhaft beibehält, und in der Spannrichtung der Plane entspricht. Außerdem wird durch die schwarze Farbe besonders viel Wärme absorbiert und eine hohe UV-Beständigkeit erreicht.

Die Notwendigkeit des Einbringens langer Verstärkungsstreifen in die Plane erübrigt sich bei Planengestellen, bei denen das Planenoberkantenprofil in seinem oberen Teil eine U-förmige Nut bildenden, im wesentlichen rechtwinkligen, Schenkel mit einem horizontalen und vertikalen Schenkelteil aufweist zur Halterung von Enden der Spriegelprofile mittels der gebildeten Nut, wenn das Profil des oben gelegenen Schenkelteils eine Ausbuchtung nach oben aufweist, die als Rundung in den vertikalen Profilteil übergeht.

Die Ausbuchtung hebt die Plane über die zur Befestigung der Spriegelprofile in der U-förmigen Nut benutzten Nietköpfe hinaus, so daß die Nietköpfe als Scheuerstellen vorteilhaft beseitigt sind. Der langsame bogenförmige Übergang der Ausbuchtung in den vertikalen Schenkelteil verringert das Scheuern auch in diesem Bereich.

Die Maßnahme, daß Ausbuchtung an ihrer obersten Stelle einen abgeflachten Bereich aufweist, bewirkt eine weitere Verringerung des Verschleißes.

Wenn der horizontal angeordnete Teil des oberen Schenkels im Bereich außerhalb der Ausbuchtung außen mindestens eine Kerbe aufweist, wird das Setzen von Bohrungen zur Befestigung der Spriegelprofile wesentlich erleichtert, da die Bohrerspitze in der Kerbe beim Anbohren geführt ist und deshalb nicht verläuft.

Weitere Vorteile und erfindungswesentliche Merkmale ergeben sich aus der nachfolgenden Beschreibung einer bevorzugten Ausführungsform der Erfindung unter Bezugnahme auf die beigefügte Zeichnung, in der gleiche Teile mit denselben Bezugsziffern versehen sind. Die Figuren der Zeichnung zeigen im einzelnen:
- Fig. 1: ein Planengestell in perspektivischer Ansicht,
- Fig. 2: einen Schnitt durch eine Scheuersutzkappe gemäß Schnittlinie II-II in Figur 3,
- Fig. 3: eine Sicht auf die Unterseite der Scheuerschutzkappe,
- Fig. 4: eine Seitenansicht der Scheuerschutzkappe entsprechend Richtung IV-IV in Figur 3,
- Fig. 5: ein Planenkantenprofil des Planengestells gemäß Figur 1.

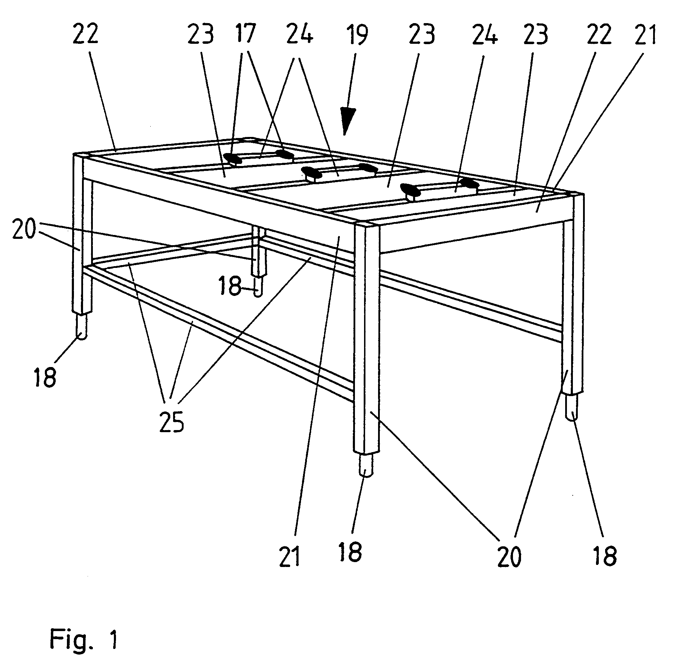

Das in Figur 1 dargestellte Planengestell 19 besteht aus vier vertikal angeordneten Eckpfosten 20, die an ihren unteren Enden entsprechende Einsteckenden 18 aufweisen, für das Einführen in die Einstecköffnungen eines nicht gezeichneten Pritschenaufbaus, z.B. eines Anhängers. Die oberen Enden der Eckpfosten werden durch in Längsrichtung angeordnete Planenkantenprofile 21 und zwei Querprofile 22 tischförmig zusammengehalten. Zwischen den Planenkantenprofilen 21 erstrecken sich Spriegelprofile 23, die in Profile 21 eingesteckt sind und auf denen wiederum kürzere Abschnitte des Spriegelprofils 24 befestigt sind, damit eine überstülpte Plane eine Dachneigung erhält, die Wasser leicht abfließen läßt.

Zur Verstärkung des Gestells werden die Eckpfosten 20 im unteren Bereich mittels Relingprofile 25 U-förmig verbunden.

Die Enden der Spriegelprofilabschnitte 24 sind mit horizontal angeordneten Scheuerschutzkappen 17 als Scheuerschutzflächen abgedeckt.

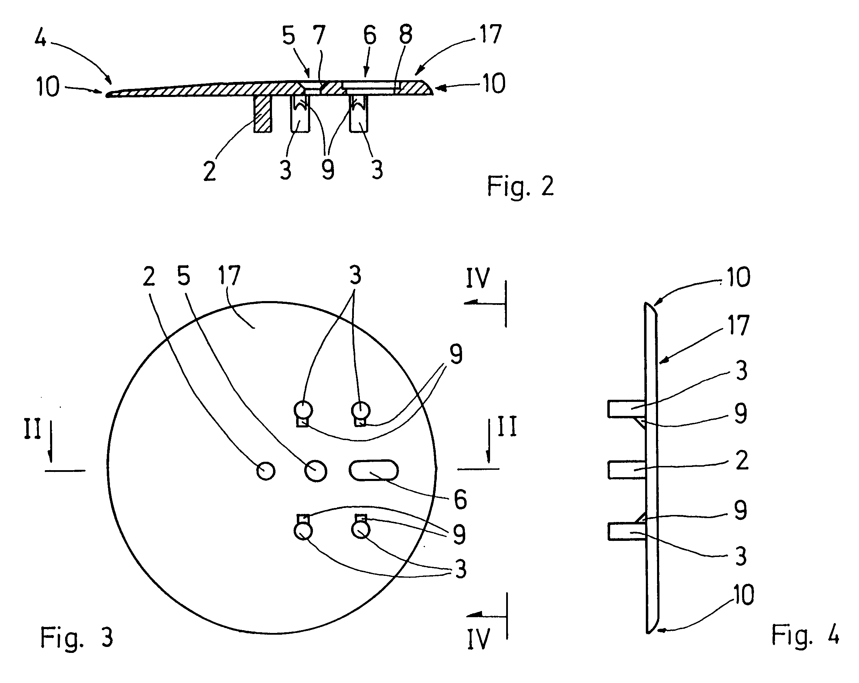

Figur 2 zeigt einen vertikalen Schnitt durch die erfindungsgemäße Scheuerschutzkappe. Sie ist als Platte ausgebildet, auf deren Unterseite fünf zylindrische Stifte 2, 3 angeordnet sind, die dem Positionieren der Kappen auf dem Spriegelprofilende dienen. Stift 2 dient als Anschlag am Ende des Spriegelprofils, während die restlichen vier Stifte 3 die Kappe an der Längskante des Spriegelprofils führen. Dadurch ist die Kappe in ihrer Position am Spriegelprofilende in der Ebene festgelegt. Die Mehrzahl der Stifte 2, 3 befindet sich in einem Bereich der Kappe, in dem die Kappe dicker ausgebildet ist. Zum freien, in ihrer Montageposition, austragenden Rand 4 hin, verjüngt sich die Dicke der Platte. Des weiteren sind im Schnitt zwei Öffnungen 5, 6 erkennbar, wobei die Öffnung 5 eine Kegelfläche 7 aufweist zum Befestigen der Platte mittels einer Senkkopfschraube, und in Öffnung 6 eine Stufenfläche 8 vorgesehen ist, auf der sich der Bund eines Nietenkopfes zur Befestigung der Platte abstützen kann.

In Figur 3 ist erkennbar, daß die Scheuerschutzkappe 17 als Kreisscheibe geformt ist, in deren ungefährer Mitte der Stift 2 angeordnet ist. Stift 2, Öffnung 5 und Öffnung 6 liegen auf einer gedachten Mittel- oder Symmetrielinie. Im gleichen Abstand von dieser gedachten Mittellinie sind jeweils zwei Stifte 3 angeordnet, deren lichter Abstand in etwa der Breite des Spriegelprofils entspricht. Durch angeformte Stege 9 sind die freien Enden der angeformten Stifte 3 etwas zueinander geneigt. Stift 2 weist einen solchen Steg nicht auf.

In Figur 4 ist die Scheuerschutzkappe 17 in einer Seitenansicht dargestellt. Dadurch wird erkennbar, daß sie in etwa die gleiche Dicke quer zur gedachten Mittellinie aufweist. Die Ränder der Kappe sind zur Oberseite hin mit Radien 10 versehen.

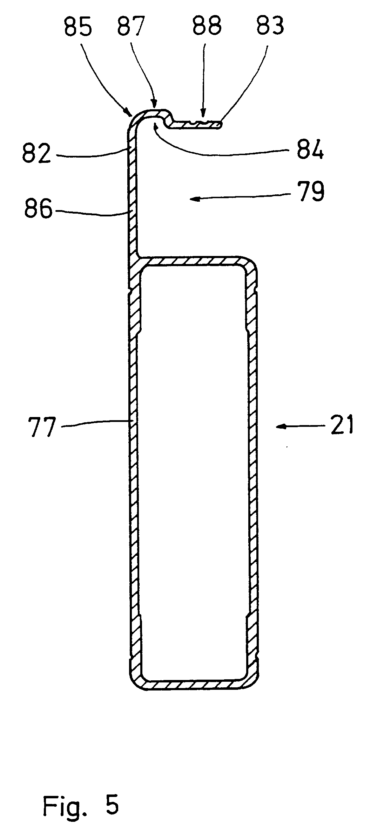

Figur 5 stellt ein Planoberkantenprrfil 21 dar, dessen Hohlprofilteil 77 durch ein die breitere Seite verlängernden rechtwinkligen Schenkel 82, ein zur Seite hin geöffnete U-förmige Nut 79 aufweist, die zur Aufnahme des Spriegelprofils 23 dient. Wie aus Figur 1 ersichtlich, wird das Spriegelprofil 23 rechtwinklig zum Oberkantenprofil 21 angeordnet und von der Nut 79 mit dem Ende aufgenommen. Die Lage der beiden Profile 23 und 24 ist aus Figur 1 ersichtlich. Durch Klebeverbindungen werden die Teile 23, 24 in ihrer Lage zueinander gehalten.

Spriegelprofil 23 wird mittels Flachkopfschraube oder Niet mit dem Profil 21 verbunden. Zu diesem Zweck wird das Ende des Spriegelprofils 23 in die Nut 79 eingesteckt und beide Profile gemeinsam zunächst durch den horizontalen Schenkelteil 83 gebohrt und anschließend in diese Bohrung ein Niet gesetzt.

Damit der Bohrer beim Ansetzen nicht abgleitet, weist das Profil im horizontalen Schenkelteil 83 eine Kerbe 88 auf. Außerdem ist der horizontale Schenkelteil 83 im Bereich seines Übergangs zum vertikalen Schenkelteil 86 so geformt, daß er eine nach oben gerichtete Ausbuchtung 84 bildet. An der obersten Stelle der Ausbuchtung ist der horizontale Schenkelteil im Bereich 87 abgeflacht. Von dort geht er mit einer Rundung 85 sanft in den vertikalen Schenkelteil 86 über, der die Verlängerung der breiten Seite des Hohlprofil 77 bildet.

Das erfindungsgemäße Planengestell schont eine überstülpte Plane in einem Ausmaß, daß auf das Ausrüsten der Plane mit verstärkenden Flicken in den genannten Bereichen vollständig verzichtet werden kann. Die Lebenserwartung der Plane ist in überraschendem Maße gesteigert worden.

### BEZUGSZEICHENLISTE

### Fig. 1, 2, 3, 4

- 2: Stift
- 3: Stift
- 4: Rand (verjüngt)
- 5: Öffnung
- 6: Öffnung
- 7: Kegelfläche
- 8: Stufenfläche
- 9: Steg
- 10: Radius
- 17: Scheuerschutzkappe
- 18: Einsteckende
- 19: Planengestell
- 20: Eckpfosten
- 21: Planenkantenprofil
- 22: Querprofil
- 23: Spriegelprofil
- 24: Spriegelprofil
- 25: Relingsprofil

### Fig. 5

- 77: Hohlprofilteil
- 79: U-förmige Nut
- 82: rechtwinkliger Schenkel
- 83: horizontaler Schenkelteil
- 84: Ausbuchtung
- 85: Rundung
- 86: vertikales Schenkelteil
- 87: Bereich
- 88: Kerbe

## Patentansprüche

1. Planengestell (19) für Fahrzeuge und Anhänger mit Pfosten (20) zwischen denen in Querrichtung verbindende Spriegelprofile (23) und in Längsrichtung Planenkantenprofile (21) angeordnet sind, **dadurch gekennzeichnet,** daß auf den verbindenden Spriegelprofilen (23) kurze Spriegelprofile (24) vorgesehen sind, an deren Enden Platten (17) als Scheuerschutzkappen, die zu einem Teil ihres Randes hin sich verjüngend geformt sind, mit einer Unterseite, die Formelemente zum Positionieren aufweist, befestigt sind.

2. Planengestell nach Anspruch 1, **dadurch gekennzeichnet,** daß die Formelemente zum Positionieren als angeformte, vorzugsweise zylindrische, Stifte (2, 3) ausgebildet sind.

3. Planengestell nach Anspruch 1, **dadurch gekennzeichnet,** daß die Formelemente zum Positionieren außerhalb des sich verjüngenden Teils der Platte angeordnet sind.

4. Planengestell nach einem der Ansprüche 2 oder 3, **dadurch gekennzeichnet,** daß je zwei Stifte (3) im gleichen Abstand zu jeder Seite einer gedachten Mittelinie sowie ein Stift (2) etwa im Zentrum der Platte (17) angeordnet sind.

5. Planengestell nach einem der Ansprüche 2 bis 4, **dadurch gekennzeichnet,** daß zwischen den sich gegenüberstehenden Stiften (3) mindestens eine Öffnung (5, 6) mit einer Kegelfläche (7) oder Stufenfläche (8) als Formelement zum Befestigen mittels einer Senkkopfschraube oder mittels eines Blindnietes vorgesehen ist.

6. Planengestell nach einem der Ansprüche 2 bis 5, **dadurch gekennzeichnet,** daß die sich gegenüberstehenden Stifte (3) zueinander geneigt ausgerichtet sind.

7. Planengestell nach einem der Ansprüche 2 bis 6, **dadurch gekennzeichnet,** daß ein oder mehrere Stifte (3) an der Ansatzstelle zur Platte (17) einen Steg (9) aufweisen, der zur gedachten Mittelinie gerichtet ist.

8. Planengestell nach einem der Ansprüche 2 bis 7, **dadurch gekennzeichnet,** daß die Schutzkappe (17) rund ausgebildet ist und einen Durchmesser aufweist, der die Weite der im Betrieb auftretenden Relativbewegungen zwischen Platte und aufliegender Plane übertrifft.

9. Planengestell nach einem der Ansprüche 1 bis 8, **dadurch gekennzeichnet,** daß die Schutzkappe (17) aus, vorzugsweise schwarzem, Kunststoff, insbesondere PVC, geformt ist.

10. Planengestell nach einem der Ansprüche 1 bis 9, wobei das Planenkantenprofil in seinem oberen Teil einen eine U-förmige Nut (79) bildenden, im wesentlichen rechtwinkligen, Schenkel (82) mit einem horizonatlen (83) und einem vertikalen Schenkelteil (86) aufweist, zur Halterung von Enden der Spriegelprofile (23), **dadurch gekennzeichnet,** daß das Profil des oben gelegenen horizontalen Schenkelteils (83) als Scheuerschutzfläche eine Ausbuchtung (84) nach oben aufweist, die als Rundung (85) in den vertikalen Profilteil (86) übergeht.

11. Planengestell nach Anspruch 10, **dadurch gekennzeichnet,** daß die Ausbuchtung (84) an ihrer obersten Stelle einen abgeflachten Bereich (87) aufweist.

12. Planengestell nach einem der Ansprüche 1 bis 11, **dadurch gekennzeichnet,** daß der horizontal angeordnete Teil (83) des oberen Schenkels (82) im Bereich außerhalb der Ausbuchtung (84) außen mindestens eine Kerbe (88) aufweist.

## Claims

1. Tarpaulin frame (19) for vehicles and trailers, having posts (20) between which connecting support profiles (23) are disposed in the transverse direction and tarpaulin edge profiles (21) are disposed in the longitudinal direction, **characterized in that** there are provided, on the connecting support profiles (23), short support profiles (24) to the ends of which plates (17) are attached as anti-chafing caps, which are so shaped as to taper in the direction of part of their rim, with a lower side which has shaped elements for positioning.

2. Tarpaulin frame according to claim 1, **characterized in that** the shaped elements for positioning are constructed as formed-on, preferably cylindrical pins (2, 3).

3. Tarpaulin frame according to claim 1, **characterized in that** the shaped elements for positioning are disposed outside the tapering part of the plate.

4. Tarpaulin frame according to one of claims 2 or 3, **characterized in that** pairs of pins (3) are disposed at the same distance on each side of an imaginary centre line and one pin (2) is disposed approximately in the centre of the plate (17).

5. Tarpaulin frame according to one of claims 2 to 4, **characterized in that** there is provided, between the mutually opposed pins (3), at least one opening (5, 6) having a conical surface (7) or stepped surface (8) as a shaped element for attachment by means of a countersunk screw or by means of a blind rivet.

6. Tarpaulin frame according to one of claims 2 to 5, **characterized in that** the mutually opposed pins (3) are oriented at an inclination to one another.

7. Tarpaulin frame according to one of claims 2 to 6, **characterized in that** one or more pins (3) have, at the point of attachment to the plate (17), a web (9) which is directed towards the imaginary centre line.

8. Tarpaulin frame according to one of claims 2 to 7, **characterized in that** the protecting cap (17) is of round construction and has a diameter which exceeds the width of the relative movements between the plate and the tarpaulin resting thereon that occur during operation.

9. Tarpaulin frame according to one of claims 1 to 8, **characterized in that** the protecting cap (17) is formed from plastics material, in particular PVC, which is preferably black.

10. Tarpaulin frame according to one of claims 1 to 9, wherein the tarpaulin edge profile has, in its upper part, a substantially rectangular flange (82) forming a U-shaped groove (79) and having a horizontal flange part (83) and a vertical flange part (86), for holding the ends of support profiles (23), **characterized in that** the profile of the horizontal flange part (83) located at the top has, as an anti-chafing surface, a bulge (84) in the upward direction, which merges, as a rounded portion (85), into the vertical profile part (86).

11. Tarpaulin frame according to claim 10, **characterized in that** the bulge (84) has a flattened region (87) at its uppermost point.

12. Tarpaulin frame according to one of claims 1 to 11, **characterized in that** the horizontally disposed part (83) of the upper flange (82) has at least one notch (88) on the outside in the region outside the bulge (84).

## Revendications

1. Armature de bâche (10) pour véhicules et remorques comportant des poteaux (20) entre lesquels sont prévus des profilés formant arceaux (23) dans la direction transversale et des profilés d'arête de bâche (21) dans la direction longitudinale, caractérisée en ce que les profilés d'arceau (23) à relier, sont équipés de courts profilés d'arceau (24) dont les extrémités sont munies de plaques (17) constituant des capuchons de protection contre l'usure, de forme allant en diminuant au moins sur une partie de leurs bords, avec sur la face inférieure, des éléments moulés pour le positionnement.

2. Armature de bâche selon la revendication 1, caractérisée en ce que les éléments de forme pour le positionnement sont des broches (2, 3) faisant corps, et de préférence cylindriques.

3. Armature de bâche selon la revendication 1, caractérisée en ce que les éléments de forme pour le positionnement sont prévus en dehors de la partie allant de la plaque en diminuant.

4. Armature de bâche selon l'une des revendications 2 ou 3, caractérisée en ce qu'il y a chaque fois deux broches (3) à la même distance de chaque côté d'une ligne imaginaire ainsi qu'une broche (2) sensiblement au milieu de la plaque (17).

5. Armature de bâche selon l'une des revendications 2 à 4,caractérisée en ce que, entre les broches en regard (3) il y a au moins une ouverture (5,6) avec une surface conique (7) ou une surface en gradin (8) comme éléments moulés pour la fixation à l'aide d'une vis à tête fraisée ou d'un rivet aveugle.

6. Armature de bâche selon l'une des revendications 2 à 5, caractérisée en ce que les broches (3) en regard sont inclinées l'une par rapport à l'autre.

7. Armature de bâche selon l'une des revendications 2 à 6, caractérisée en ce que une ou plusieurs broches (3) comportent à leur jonction avec la plaque (17) un gousset (9) dirigé vers la ligne d'axe.

8. Armature de bâche selon l'une des revendications 2 à 7, caractérisée en ce que le capuchon protecteur (17) est arrondi et présente un diamètre supérieur à l'amplitude des mouvements relatifs qui se produisent entre la plaque et la bâche appuyée sur celle-ci pendant l'utilisation.

9. Armature de bâche selon l'une des revendications 1 à 8, caractérisée en ce que, le capuchon protecteur (17) est réalisé de préférence en matière plastique noire, notamment en PVC.

10. Armature de bâche selon l'une des revendications 1 à 9, dans laquelle le profilé d'arête de bâche comporte une branche (82) qui forme dans sa partie supérieure une rainure (79) à section en U, essentiellement rectangulaire, avec une partie de branche horizontale (83) et une partie de branche verticale (86) pour tenir les extrémités des profilés formant arceaux (23), caractérisée en ce que, le profil de la partie de branche (83) horizontale comporte une déformation (84) tournée vers le haut et constituant une surface de protection contre l'usure, cette déformation rejoignant par un arrondi (85) la partie verticale de profilé (86).

11. Armature de bâche selon la revendication 10, caractérisée en ce que, la déformation (84) présente une zone aplatie (87) à son point le plus haut.

12. Armature de bâche selon l'une des revendications 1 à 11, caractérisée en ce que, la partie horizontale (83) de la branche supérieure (82) comporte une encoche (88) au moins extérieure dans la zone en dehors de la déformation (84).
